# FASCICULE DE BREVET EUROPEEN

(11) **EP 3 786 033 B1**
(45) Date de publication et mention de la délivrance du brevet: **12.10.2022**
(21) Numéro de dépôt: 20189515.8
(22) Date de dépôt: 05.08.2020
(51) Int. Cl.: B62D 29/04, B62D 33/04, B60P 3/20

(54) **MODULE DE CARROSSERIE POUR VÉHICULE FRIGORIFIQUE COMPRENANT UN PANNEAU D'ISOLATION SOUS VIDE, ET PROCÉDÉ DE FABRICATION ASSOCIÉ**
KAROSSERIEMODUL FÜR KÜHLFAHRZEUG MIT VAKUUM-ISOLIERPANEEL, UND ENTSPRECHENDES HERSTELLUNGSVERFAHREN
BODY MODULE FOR MECHANICALLY REFRIGERATED VEHICLES INCLUDING A VACUUM INSULATION PANEL, AND ASSOCIATED MANUFACTURING METHOD

(30) Priorité: 02.09.2019 FR 1909638
(43) Date de publication de la demande: 03.03.2021
(73) Titulaire: JEAN CHEREAU SAS, 50220 Ducey-les-Chéris (FR)
(72) Inventeur: MONTI, Arthur, 50300 Saint Senier sous Avranches (FR); HUARD, Jérôme, 50300 SAINT MARTIN DES CHAMPS (FR); PELCHAT, Stéphane, 50540 ISIGNY LE BUAT (FR); DUBOURG, Vincent, 50220 JUILLEY (FR)
(74) Mandataire: Casalonga

(56) Documents cités:
- EP-A1- 3 210 864
- EP-A2- 1 785 337
- FR-A1- 2 963 291
- FR-A1- 2 991 250

## Description

La présente invention concerne le domaine des véhicules frigorifiques, et notamment des véhicules frigorifiques utilisés pour le transport de marchandises.

Plus particulièrement, la présente invention concerne un module de carrosserie utilisé pour la fabrication d'une carrosserie frigorifique destinée à être montée par exemple sur le châssis d'un véhicule routier de transport tel qu'un camion, une semi-remorque, une remorque ou un porteur.

Une carrosserie frigorifique permet de transporter des marchandises ou des denrées périssables nécessitant d'être maintenues à une température constante, généralement inférieure à la température extérieure. Dans ce but, la carrosserie comprend un groupe ou machine frigorifique pour envoyer de l'air à température régulée à l'intérieur de l'espace de chargement de celle-ci.

Classiquement, les parois d'une carrosserie frigorifique sont formées à partir de panneaux composites multicouches.

Pour améliorer les propriétés d'isolation thermique sans augmentation de l'épaisseur des parois de la carrosserie frigorifique, il est connu d'utiliser des panneaux d'isolation sous vide comportant un matériau isolant poreux formant une âme qui est encapsulée à l'intérieur d'une membrane étanche à l'oxygène et à l'eau.

La demande de brevet FR-A1-2 963 291 (CHEREAU) et EP 3 210 864 décrit par exemple un module de carrosserie comprenant un panneau d'isolation sous vide et une enveloppe de protection surmoulée autour du panneau de manière à l'encapsuler entièrement. L'enveloppe de protection est réalisée en polyuréthane expansé.

Selon une autre conception, le module de carrosserie peut comprendre une plaque support sur laquelle est fixée le panneau d'isolation sous vide, et une enveloppe de protection surmoulée à la fois sur le panneau et sur la plaque support. Pour plus de détail, on pourra se référer à la demande de brevet FR-A1-2 991 250 (CHEREAU).

Cependant, de telles solutions avec surmoulage d'une enveloppe de protection peuvent être relativement difficiles à réaliser industriellement pour un fabricant de carrosserie frigorifique. En effet, l'utilisation de ce procédé rend délicate la maîtrise de paramètres, tels que l'homogénéité et la densité du polyuréthane surmoulé de l'enveloppe de protection, qui influent sur les propriétés d'isolation thermique du matériau.

En outre, le procédé par surmoulage peut également conduire à des défauts macroscopiques, tels que des pores à la surface de l'enveloppe de protection ou des bulles d'air dans son épaisseur. Ceci nuit aussi à l'obtention de propriétés d'isolation thermique améliorée.

De plus, pour permettre une expansion du polyuréthane dans de bonnes conditions lors du surmoulage, il est nécessaire de prévoir des bandes de matière périphériques présentant une largeur assez importante. Ceci implique une reprise par usinage en largeur et en longueur du module de carrosserie pour optimiser le ratio entre la surface du panneau d'isolation sous vide et la surface du polyuréthane expansé.

La présente invention vise à remédier à ces inconvénients.

Plus particulièrement, la présente invention vise à prévoir un module de carrosserie pour véhicule frigorifique, notamment pour véhicule routier de transport de marchandises, présentant de bonnes propriétés d'isolation thermique et facile à fabriquer.

L'invention a pour objet un module de carrosserie pour véhicule frigorifique, notamment pour véhicule routier de transport de marchandises, comprenant au moins un élément d'isolation sous vide, une embase délimitant au moins un logement à l'intérieur duquel est disposé ledit élément d'isolation sous vide, et au moins un couvercle de fermeture fixé sur l'embase et monté en appui contre ledit élément d'isolation sous vide. Ledit élément d'isolation sous vide est entièrement logé entre l'embase et ledit couvercle de fermeture. Ledit élément d'isolation sous vide est pourvu d'une âme et d'une membrane d'encapsulation de ladite âme qui est étanche aux gaz.

Selon une caractéristique générale, le module comprend en outre au moins un moyen d'étanchéité qui est interposé entre l'embase et ledit couvercle de fermeture et qui est périphérique audit élément d'isolation sous vide.

Avec un tel module de carrosserie, il est possible d'utiliser pour l'embase et le couvercle des blocs qui ont été fabriqués au préalable, par exemple des blocs de polyuréthane rigide déjà expansé et dont la qualité peut être contrôlée avant l'incorporation du ou des éléments d'isolation sous vide.

En outre, la taille du ou des évidements de l'embase peut être optimisée sans risque de dégrader la qualité de la matière de celle-ci au niveau de ses bords, contrairement aux solutions avec surmoulage.

Par ailleurs, avant l'incorporation du ou des éléments d'isolation sous vide, il est possible de réaliser sur l'embase des usinages pour l'intégration de barres ou rails d'arrimage, de feuillures d'inserts métalliques etc., ce qui élimine le risque de détérioration des éléments d'isolation sous vide lors de ces opérations.

Concernant le moyen d'étanchéité du module, celui-ci permet d'éviter une migration de résine catalysée entre l'embase et le couvercle en direction de l'élément d'isolation sous vide, lors de la fabrication du panneau de carrosserie intégrant le module.

On évite ainsi une éventuelle détérioration de l'élément d'isolation sous vide par la résine catalysée. Le moyen d'étanchéité assure aussi une fonction de rupture de pont thermique à l'intérieur du module en évitant que de la résine catalysée ne traverse l'épaisseur du module.

Dans un mode de réalisation, le moyen d'étanchéité recouvre au moins en partie la surface de butée qui est ménagée sur l'embase et contre laquelle est monté en appui ledit couvercle de fermeture.

Ainsi, le moyen d'étanchéité est comprimé lors de l'assemblage du couvercle et de l'embase, ce qui accroit encore son efficacité.

L'embase peut comprendre au moins un épaulement décalé latéralement vers l'extérieur par rapport audit logement et décalé vers ledit couvercle de fermeture par rapport au fond dudit logement, le moyen d'étanchéité périphérique s'étendant au moins le long dudit épaulement.

Dans un mode de réalisation particulier, l'élément d'isolation sous vide peut être centré sur le plan longitudinal médian du module. Ainsi, on limite les sollicitations en flexion de l'élément d'isolation sous vide, notamment lors de la fabrication du panneau de carrosserie intégrant le module, ce qui permet de limiter une éventuelle détérioration.

Dans un mode de réalisation particulier, ledit couvercle de fermeture présente une couleur différente de celle de l'embase. Alternativement ou en combinaison, ledit couvercle de fermeture peut présenter une texture différente de celle de l'embase. Avantageusement, la surface du couvercle de fermeture est supérieure à celle de l'élément d'isolation sous vide de sorte que le couvercle s'étende en saillie au-delà de l'élément d'isolation sous vide sur toute la périphérie dudit élément.

Ainsi, lors de la fabrication du module, il est possible de localiser visuellement l'emplacement du ou des éléments d'isolation sous vide. En outre, une fois fabriqué le panneau de carrosserie intégrant le module et en cas de réparation urgente nécessitant un perçage, il est possible de perforer les peaux composites opaques du panneau recouvrant le module sur une profondeur de quelques millimètres, jusqu'à la surface du module, et de constater visuellement s'il peut poursuivre ou non son perçage.

Avantageusement, l'embase et ledit couvercle de fermeture sont de préférence réalisés chacun dans un matériau isolant thermiquement. Comme indiqué précédemment, l'embase peut être réalisée en polyuréthane expansé. Ledit couvercle de fermeture peut également être réalisé en polyuréthane expansé. Alternativement, il est possible de réaliser l'embase et/ou le couvercle dans d'autres matériaux, par exemple en polystyrène, en mousse PET ou plus généralement tout polymère expansé.

Dans un mode de réalisation particulier, l'embase délimite une pluralité de logements à l'intérieur de chacun desquels est disposé un élément d'isolation sous vide, le module comprenant une pluralité de couvercles de fermeture associés chacun à un élément d'isolation sous vide.

L'élément d'isolation sous vide peut se présenter sous la forme d'un panneau. L'âme de l'élément d'isolation sous vide peut se présenter sous la forme d'une plaque réalisée dans un matériau isolant thermiquement, pouvant par exemple être à pores ouverts. Avantageusement, la membrane d'encapsulation est étanche aux gaz, notamment à l'oxygène et à l'eau.

Le moyen d'étanchéité peut par exemple être de la colle. En variante, le moyen d'étanchéité peut par exemple être un adhésif. Dans ces cas, le moyen d'étanchéité participe également au collage du couvercle sur l'embase. Alternativement, le moyen d'étanchéité peut ne pas participer à la fixation du couvercle et remplir uniquement sa fonction d'étanchéité. Dans ce cas, le moyen d'étanchéité peut être un caoutchouc, un élastomère, etc.

L'invention concerne également un panneau de carrosserie pour véhicule frigorifique, notamment pour véhicule routier de transport de marchandises, comprenant une pluralité de modules de carrosserie tels que définis précédemment et alignés longitudinalement les uns relativement aux autres.

L'invention concerne encore une carrosserie frigorifique pour véhicule, notamment pour véhicule routier de transport de marchandises, comprenant un espace intérieur de chargement délimité par des parois formant des flancs verticaux, un plancher et un plafond, dans laquelle au moins une desdites parois comprend un panneau de carrosserie tel que défini précédemment.

L'invention concerne aussi un procédé de fabrication d'un module de carrosserie tel que défini précédemment, comprenant :
- une étape de montage dudit élément d'isolation sous vide à l'intérieur dudit logement de l'embase,
- une étape de dépose du moyen d'étanchéité sur une surface de l'embase qui est périphérique audit logement de l'embase, et
- une étape de pressage du couvercle contre ledit élément d'isolation sous vide et contre ledit moyen d'étanchéité déposé sur la surface de l'embase périphérique audit logement.

Dans un mode de mise en œuvre avantageux, l'étape de pressage du couvercle est réalisée sous vide.

Dans un mode de mise en œuvre particulier, le procédé comprend en outre une étape de dépose d'un moyen de collage sur l'embase et/ou sur une première face principale dudit élément d'isolation sous vide, et sur ledit couvercle de fermeture et/ou sur une seconde face principale opposée dudit élément d'isolation sous vide. Le moyen d'étanchéité est distinct du moyen de collage.

La présente invention sera mieux comprise à la lecture de la description détaillée de modes de réalisation pris à titre d'exemples nullement limitatifs et illustrés par les dessins annexés sur lesquels :
[Fig 1] est une vue de côté d'une carrosserie frigorifique selon un exemple de réalisation de l'invention,
[Fig 2] est une vue en coupe selon l'axe II-II de la figure 1,
[Fig 3] est une vue en coupe longitudinale d'un module de la carrosserie frigorifique des figures 1 et 2 selon un premier exemple de réalisation de l'invention,
[Fig 4] est une vue en perspective éclatée du module de la figure 3,
[Fig 5] est une vue en coupe longitudinale d'un module de carrosserie selon un deuxième exemple de réalisation de l'invention,
[Fig 6] et
[Fig 7] sont des vues en perspective éclatée de modules de carrosserie selon des troisième et quatrième exemples de réalisation de l'invention.

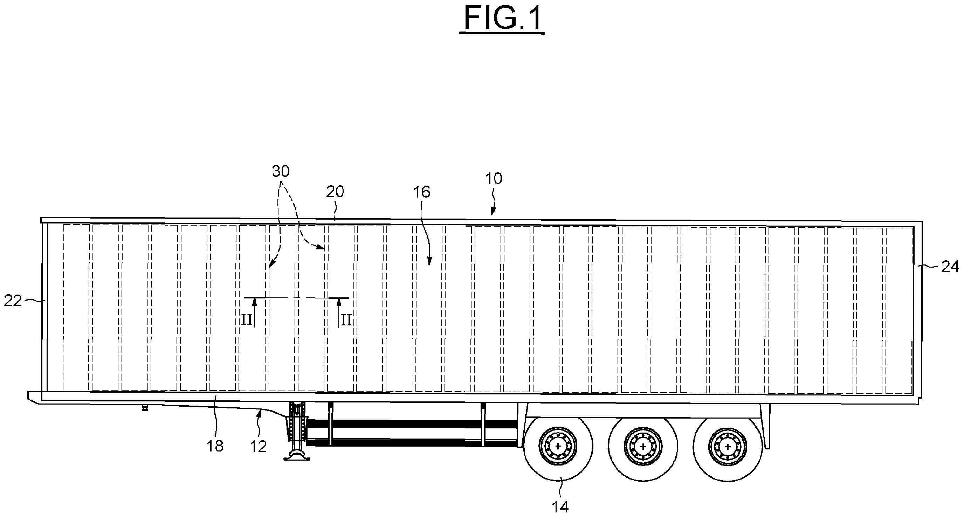

Sur la figure 1, on a représenté une carrosserie frigorifique, référencée 10 dans son ensemble, montée sur un châssis 12 porteur de véhicule de transport routier s'étendant longitudinalement et équipé de roues 14.

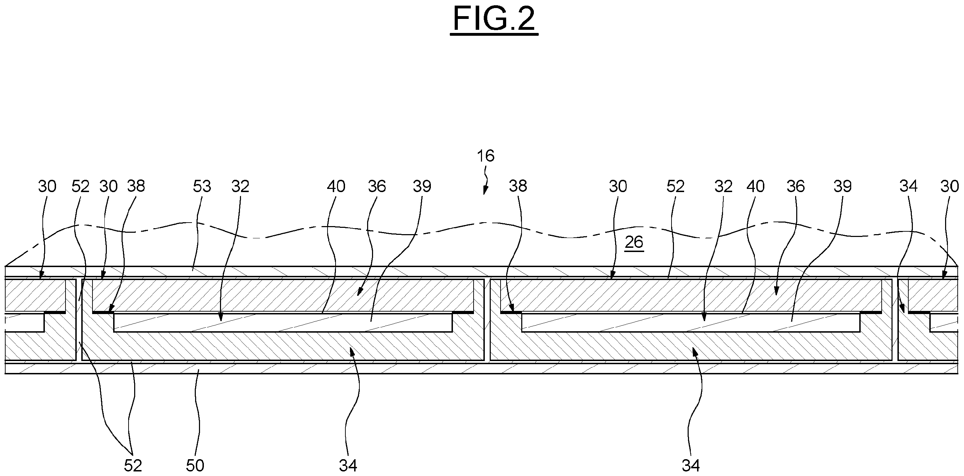

La carrosserie 10 comprend deux flancs 16 verticaux opposés s'étendant longitudinalement (un seul étant visible sur la figure), un plancher 18, un plafond 20, une face avant 22 et une porte arrière 24 assemblés entre eux pour délimiter un espace de chargement 26 intérieur qui est visible en partie à la figure 2.

Comme illustré sur cette figure 2, le flanc 16 comprend une pluralité de modules 30 de carrosserie identiques, alignés longitudinalement et assemblés les uns relativement aux autres comme cela sera décrit plus en détail par la suite. Les modules 30 de carrosserie se présentent sous la forme de panneaux de forme générale parallélépipédique à section rectangulaire.

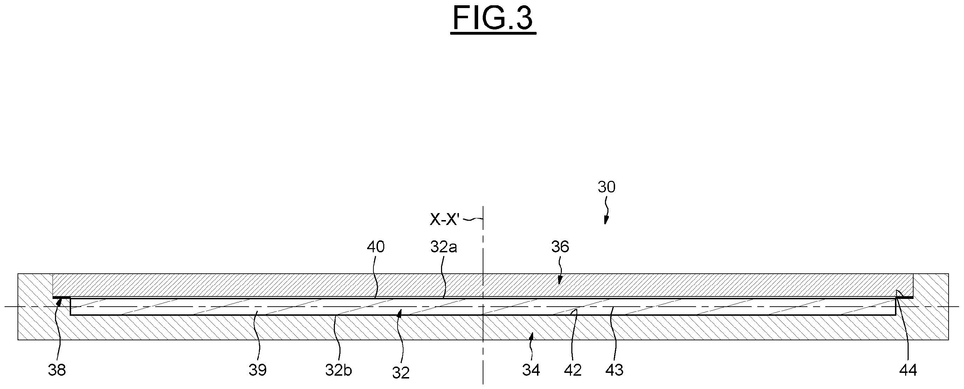

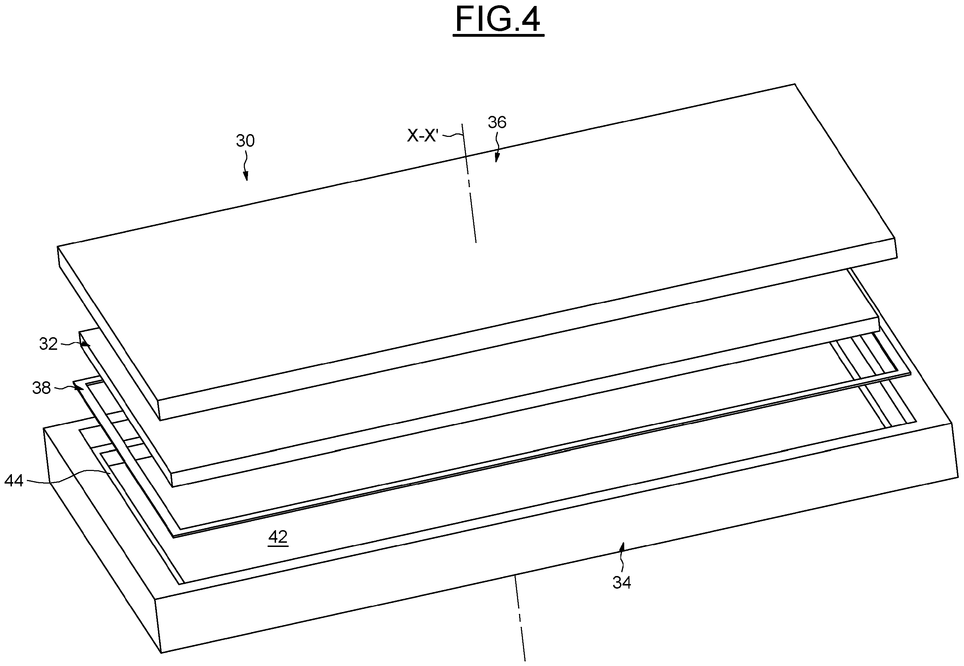

Comme illustré aux figures 3 et 4, chaque module 30 de carrosserie comprend un panneau 32 d'isolation sous vide, une embase 34 pour le montage de ce panneau, et un couvercle 36 de fermeture.

Comme cela sera décrit plus en détail par la suite, chaque module 30 de carrosserie comprend également un moyen d'étanchéité 38 pour la protection du panneau 32 d'isolation sous vide. Le moyen d'étanchéité 38 est distinct de l'embase 34 et du couvercle 36.

Le panneau 32 d'isolation sous vide est entièrement disposé entre l'embase 34 et le couvercle 36. Autrement dit, le panneau 32 d'isolation sous vide est inaccessible depuis l'extérieur du module 30.

L'embase 34, le panneau 32 d'isolation sous vide et le couvercle 36 sont empilés selon une direction verticale illustrée par l'axe X-X'.

Le panneau 32 d'isolation sous vide comprend un noyau ou âme 39 et une membrane 40 d'encapsulation enveloppant l'âme et étanche aux gaz, notamment à l'oxygène et à l'eau. Dans le mode de réalisation illustré, le panneau 32 d'isolation sous vide se présente sous la forme d'une plaque souple parallélépipédique à section rectangulaire. Le panneau 32 d'isolation sous vide comprend deux faces 32a, 32b principales opposées délimitant son épaisseur.

L'âme 39 est réalisée dans un matériau isolant thermiquement et comprend avantageusement une structure à pores ouverts. L'âme 39 peut par exemple être constituée de mousse de polystyrène, de polyuréthane, d'aérogel, de silice, etc. L'âme 39 est encapsulée dans la membrane 40 à pression nulle ou à faible pression.

La membrane 40 d'encapsulation recouvrant l'âme 39 peut par exemple être réalisée en polyester, en polyéthylène, en aluminium ou tout autre matériau approprié permettant de former une barrière étanche aux gaz. Le panneau 32 d'isolation est mis sous vide par évacuation de l'air emprisonné dans l'âme 39 de manière à réduire la conductivité thermique du panneau. Pour plus de détails sur les matériaux pouvant être utilisés et sur les procédés de fabrication des panneaux d'isolation sous vide, on pourra à titre d'exemple se référer aux brevets US-B2-6,863,949 et EP-B1-1 265 746.

Pour accroître la performance et la longévité du panneau 32 d'isolation sous vide, un dessiccateur (non représenté) peut être ajouté à l'intérieur de l'âme 39 par exemple pour absorber la vapeur d'eau et les gaz atmosphériques résiduels.

L'embase 34 présente ici une forme générale parallélépipédique à section rectangulaire. L'embase 34 est avantageusement réalisée en polyuréthane expansé. L'embase 34 peut être obtenue par usinage ou par moulage.

L'embase 34 comprend intérieurement un logement 42 pour le montage du panneau 32 d'isolation sous vide. Le logement 42 est ouvert du côté du couvercle 36. Le logement 42 est en concordance de forme avec le panneau 32 d'isolation sous vide. Dans l'exemple de réalisation illustré, le logement 42 est centré sur l'embase 34.

La face 32b principale du panneau d'isolation sous vide est en appui contre le fond du logement 42 de l'embase. Le panneau d'isolation sous vide est fixé à l'intérieur du logement 42. Le panneau d'isolation 32 sous vide est par exemple fixé par collage sur le fond du logement 42. Le panneau d'isolation 32 sous vide est ainsi en appui indirect contre le fond du logement 42 avec interposition de colle entre eux. Alternativement, le panneau d'isolation 32 sous vide peut être fixé par tout autre moyen approprié, par exemple par adhésivage.

Dans la position montée du panneau 32 d'isolation sous vide à l'intérieur de l'embase 34, seule la face 32a principale du panneau est laissée libre par celle-ci. L'embase 34 recouvre la face 32b principale du panneau d'isolation sous vide et les différents chants transversaux reliant cette face à la face 32a opposée.

Par ailleurs, dans l'exemple de réalisation illustré, le panneau 32 d'isolation sous vide est centré sur le plan 43 longitudinal médian du module 30. Par plan longitudinal médian du module 30, on entend le plan longitudinal qui se trouve au milieu de l'épaisseur totale du module.

L'embase 34 comprend également intérieurement un épaulement 44 périphérique au logement 42. L'épaulement 44 est situé sur le pourtour du logement 42. L'épaulement 44 est décalé par rapport au fond du logement 42 du côté du couvercle 36. Autrement dit, l'épaulement 44 est décalé vers le haut par rapport au fond du logement 42 en considérant l'axe X-X'. L'épaulement 44 prolonge horizontalement vers l'extérieur un bord périphérique latéral du logement 42. L'épaulement 44 est orienté verticalement vers le haut en considérant l'axe X-X'. L'épaulement 44 est décalé vers le bas par rapport à la face supérieure de l'embase 34 en considérant l'axe X-X'.

Comme indiqué précédemment, la face 32b principale du panneau d'isolation sous vide est en appui contre le fond du logement 42 de l'embase. La face 32a principale opposée du panneau affleure verticalement avec l'épaulement 44.

L'épaulement 44 forme une surface de butée pour le montage du couvercle 36. Dans l'exemple de réalisation illustré, le couvercle 36 se présente sous la forme d'une plaque rectangulaire. Le couvercle 36 est avantageusement réalisé en polyuréthane expansé. Le couvercle 36 peut être obtenu par usinage ou par moulage.

Dans la position montée du couvercle 36 sur l'embase 34, celui-ci recouvre la face 32a principale du panneau d'isolation sous vide qui est laissée libre par celle-ci. Le couvercle 36 recouvre le panneau 32 d'isolation sous vide de sorte qu'il soit entièrement logé entre le couvercle et l'embase 34, et inaccessible depuis l'extérieur. Le couvercle 36 appuie sur le panneau 32 d'isolation sous vide. La face supérieure du couvercle 36 affleure verticalement avec la face supérieure de l'embase 34.

Le moyen d'étanchéité 38 s'étend sur la totalité de l'épaulement 44 de l'embase. Le moyen d'étanchéité 38 s'étend de façon continue sur l'épaulement 44. Le moyen d'étanchéité 38 s'étend sur toute la périphérie du panneau 32 d'isolation sous vide et du logement 42.

Le moyen d'étanchéité 38 est interposé entre l'embase 34 et le couvercle 36. Le couvercle 36 est en appui indirect contre l'épaulement 44 de l'embase avec interposition du moyen d'étanchéité 38. Le moyen d'étanchéité 38 est disposé dans la zone d'appui du couvercle 36 sur l'embase 34.

Dans l'exemple de réalisation illustré, le moyen d'étanchéité 38 est situé uniquement au niveau de la partie horizontale de l'épaulement 44 en considérant l'axe X-X'. Alternativement, le moyen d'étanchéité 38 pourrait être situé à la fois sur la partie horizontale et la partie verticale de l'épaulement 44, ou encore situé uniquement sur la partie verticale de l'épaulement 44.

Pour les raisons qui vont être indiquées par la suite, le moyen d'étanchéité 38 remplit une fonction d'étanchéité pour le panneau 32 d'isolation sous vide, mais également une fonction de rupture de pont thermique au sein du module 30 de carrosserie.

Pour la fabrication du module 30 on peut procéder de la manière suivante.

Dans une première étape, on fixe le panneau 32 d'isolation sous vide à l'intérieur du logement 42 de l'embase qui a été fabriquée au préalable. Pour ce faire, on applique de la colle sur le fond du logement 42 et/ou sur la face 32b principale du panneau d'isolation sous vide, et on positionne le panneau 32 contre le logement 42.

Ensuite, dans une deuxième étape, on applique de la colle sur la face 32a principale du panneau d'isolation sous vide laissée libre par l'embase 34, et/ou sur la surface inférieure du couvercle 36 destinée à venir en appui contre cette face 32a.

Puis, dans une troisième étape, on dépose le moyen d'étanchéité 38 sur l'épaulement 44 de l'embase de sorte à ce qu'il s'étende le long de l'épaulement sur toute la périphérie du panneau 32 d'isolation sous vide et du logement 42. Le moyen d'étanchéité 38 peut être déposé sous la forme d'un cordon de matière. Le moyen d'étanchéité 38 peut par exemple être déposé au pistolet sous la forme d'un jonc. Le moyen d'étanchéité 38 peut par exemple être de la colle. Cela permet au moyen d'étanchéité 38 de participer à la fonction de fixation du couvercle 36 sur l'embase 34. En variante, le moyen d'étanchéité 38 peut par exemple être un adhésif ou un caoutchouc, un élastomère, un polyuréthane non expansé etc.

Alternativement, l'ordre des deuxième et troisième étapes peut être inversé.

Ensuite, dans une quatrième étape, on presse le couvercle 36, fabriqué au préalable, contre la face 32a principale du panneau d'isolation sous vide et contre le moyen d'étanchéité 38 déposé sur l'épaulement 44 de l'embase. Lors de cette étape, le moyen d'étanchéité 38 s'écrase entre le couvercle 36 et l'épaulement 44 de l'embase.

L'étape de pressage du couvercle 36 peut avantageusement être réalisée sous vide. Ceci permet d'évacuer l'air qui peut être potentiellement présent entre le panneau 32 d'isolation sous vide, l'embase 34 et le couvercle 36. Ceci permet également au couvercle 36 d'épouser parfaitement la forme de la face 32a principale du panneau d'isolation sous vide qui peut être irrégulière du fait des replis de la membrane 40 d'encapsulation. En outre, cette technique de pressage sous vide permet une application homogène de pression sur le couvercle 36 quelles que soient les irrégularités d'épaisseur. Le pressage sous vide peut par exemple être réalisé par le biais d'un contre-moule flexible et déformable.

Enfin, lors d'une cinquième étape, le module 30 unitaire formé par l'embase 34, le panneau 32 d'isolation sous vide, le couvercle 36 et le moyen d'étanchéité 38 peut si nécessaire être repris en épaisseur. Cette reprise peut par exemple être réalisée par usinage s'il est nécessaire d'ajuster la face supérieure du couvercle 36 à celle de l'embase 34.

Pour fabriquer un panneau de carrosserie formant le flanc 16 par assemblage de modules 30 de carrosserie, on peut procéder de la manière suivante.

On utilise un support horizontal dont la dimension est au moins égale à la dimension du flanc 16 à fabriquer. Dans un premier temps, on enduit le support de cire synthétique afin de favoriser le démoulage ultérieur du flanc. On dépose ensuite sur la cire une couche de finition 50 polymérisable (figure 2), puis une couche de revêtement 52 polymérisable comprenant des fibres de verre sur la couche de finition 50. Les modules 30 de carrosserie sont ensuite appliqués contre cette couche de revêtement 52 de manière à être alignés et disposés au voisinage immédiat les uns des autres en laissant subsister un léger interstice entre deux modules immédiatement successifs.

De nouvelles couches de revêtement 52 polymérisables sont ensuite déposées de manière à enrober entièrement chacun des modules 30 de carrosserie. Une couche de finition 53 polymérisable est ensuite déposée sur les couches de revêtement 52 du côté opposé à la couche de finition 50. L'assemblage ainsi obtenu est ensuite mis sous presse jusqu'au durcissement des couches.

Après démoulage, on obtient le flanc 16 de la carrosserie frigorifique. Après assemblage de la carrosserie, le couvercle 36 de chaque module de carrosserie est situé du côté intérieur, i.e. du côté de l'espace de chargement 26 intérieur.

Lors de la fabrication du panneau de carrosserie, le moyen d'étanchéité 38 de chaque module de carrosserie forme en amont du panneau 32 d'isolation sous vide une étanchéité préalable, ce qui permet d'éviter toute migration de résine catalysée des couches de finition 50, 53 et de revêtement 52 entre l'embase 34 et le couvercle 36 en direction du logement 42 et du panneau 32.

Ainsi, le moyen d'étanchéité 38 assure aussi une fonction de rupture de pont thermique à l'intérieur du module 30 de carrosserie en évitant que des filaments ou cordons de résine catalysée ne traversent l'épaisseur du module.

Dans l'exemple de réalisation précédemment décrit, un unique panneau 32 d'isolation sous vide est utilisé pour la fabrication d'un module 30 de carrosserie. En variante, il est également possible de prévoir une pluralité de panneaux 32 d'isolation sous vide au sein d'un même module 30.

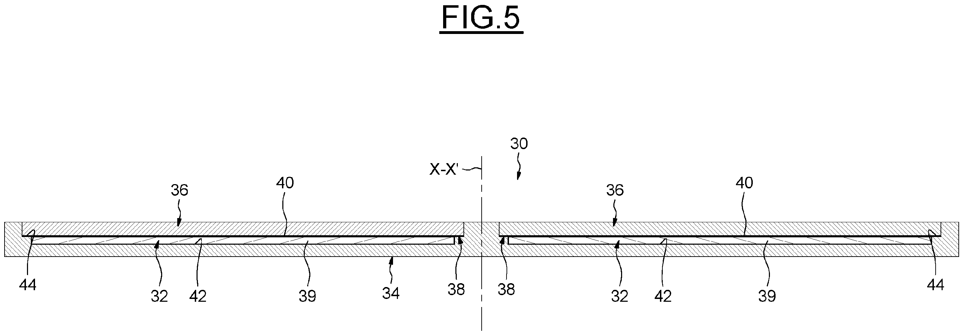

Par exemple, comme cela est illustré à la figure 5, sur laquelle les éléments identiques portent les mêmes références, le module 30 comprend deux panneaux 32 d'isolation sous vide chacun étant logé à l'intérieur d'un logement 42 propre prévu sur l'embase 34 et étant recouvert par un couvercle 36.

Dans les exemples de réalisation précédents, chaque épaulement 44 de l'embase s'étend sur toute la périphérie du logement 42 associé et du panneau 32 d'isolation sous vide monté dans ce logement.

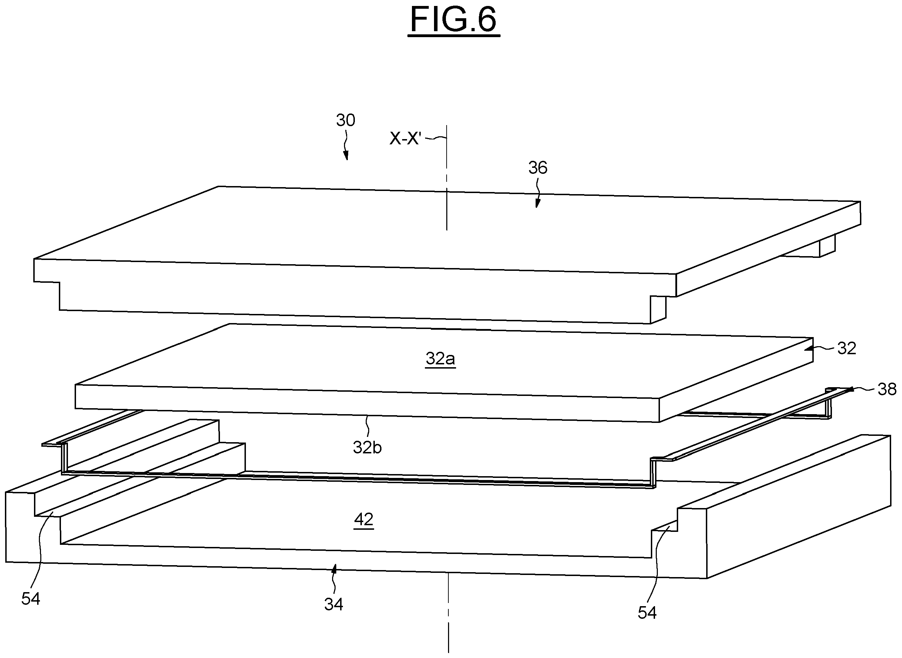

L'exemple de réalisation de la figure 6, sur laquelle les éléments identiques portent les mêmes références, diffère du premier exemple en ce que le logement 42 de l'embase est également ouvert au niveau de ses bords longitudinaux opposés. L'embase 34 recouvre ici la face 32b principale et les chants transversaux opposés de petits côtés du panneau d'isolation sous vide.

Contrairement au premier exemple de réalisation illustré, l'embase 34 ne comporte pas ici un seul épaulement périphérique au logement 42 mais deux épaulements 54 latéraux opposés. Les épaulements 54 sont décalés vers le haut par rapport au fond du logement 42 en considérant l'axe X-X'. Les épaulements 54 sont décalés vers le bas par rapport à la face supérieure de l'embase 34. Les deux épaulements 54 sont situés dans un même plan horizontal.

Le moyen d'étanchéité 38 s'étend de façon continue sur l'embase 34. Le moyen d'étanchéité 38 s'étend sur les épaulements 54 et sur le fond du logement 42. Le moyen d'étanchéité 38 s'étend sur toute la périphérie du panneau 32 d'isolation sous vide. Le moyen d'étanchéité 38 est disposé sur la surface de l'embase qui forme butée pour le couvercle 36. Cette surface de butée est formée par les épaulements 54 et les parties du fond du logement 42 laissées libre par le panneau 32 d'isolation sous vide.

En effet, dans cet exemple de réalisation, la dimension latérale du logement 42 de l'embase est supérieure à celle du panneau 32 d'isolation sous vide de sorte à laisser subsister sur le fond dudit logement deux bandes latérales opposées permettant la dépose du moyen d'étanchéité 38.

Dans la position montée du couvercle 36 sur l'embase 34, le couvercle recouvre le panneau 32 d'isolation sous vide de sorte qu'il soit inaccessible depuis l'extérieur de façon analogue au premier exemple de réalisation. Le couvercle 36 recouvre ici la face 32a principale et les chants transversaux longitudinaux du panneau d'isolation sous vide qui sont laissés libres par l'embase 34.

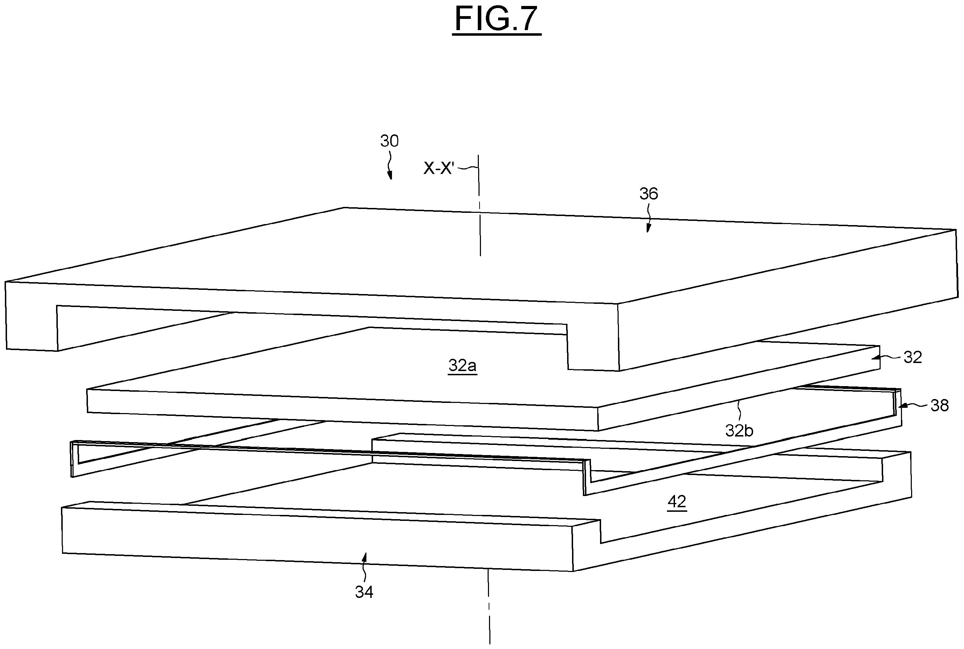

Dans l'exemple de réalisation de la figure 7, sur laquelle les éléments identiques portent les mêmes références, le logement 42 de l'embase est ouvert verticalement vers le haut en considérant l'axe X-X' et au niveau de ses bords opposés de petits côtés. L'embase 34 recouvre ici la face 32b principale et les chants transversaux longitudinaux opposés du panneau d'isolation sous vide.

Le logement 42 de l'embase est ici de même dimension que le panneau 32 d'isolation sous vide. Le couvercle 36 est en appui vertical contre la face supérieure et latéralement contre les bords de petits côtés de l'embase 34.

Le moyen d'étanchéité 38 est disposé sur la surface de butée pour le couvercle 36 qui est ménagée sur l'embase. Le moyen d'étanchéité 38 s'étend ainsi ici sur la face supérieure et les bords de petits côtés de l'embase 34. Le moyen d'étanchéité 38 s'étend de façon continue sur l'embase 34. Le moyen d'étanchéité 38 s'étend sur toute la périphérie du panneau 32 d'isolation sous vide et du logement 42.

Dans la position montée du couvercle 36 sur l'embase 34, celui-ci recouvre le panneau 32 d'isolation sous vide de sorte qu'il soit inaccessible depuis l'extérieur. Le couvercle 36 recouvre ici la face 32a principale et les chants transversaux de petits côtés du panneau d'isolation sous vide qui sont laissés libres par l'embase 34.

Dans les exemples précédemment décrits, les modules de carrosserie sont utilisés pour la fabrication d'un flanc vertical de la carrosserie. Le plancher et/ou le plafond, et/ou la face avant, et/ou la porte arrière formant les parois de la carrosserie frigorifique peuvent également être fabriqués à partir de tels modules élémentaires de carrosserie.

L'invention a été illustrée à titre d'exemple sur la base d'une carrosserie de véhicule routier de transport du type semi-remorque. L'invention est aussi applicable à une carrosserie de véhicule routier de transport du type porteur, camion, ou remorque.

## Revendications

1. Module de carrosserie pour véhicule frigorifique, notamment pour véhicule routier de transport de marchandises, comprenant au moins un élément d'isolation sous vide (32) pourvu d'une âme (39) et d'une membrane d'encapsulation (40) de ladite âme qui est étanche aux gaz, **caractérisé en ce qu'**il comprend en outre :
- une embase (34) délimitant au moins un logement (42) à l'intérieur duquel est disposé ledit élément d'isolation sous vide (32),
- au moins un couvercle (36) de fermeture fixé sur l'embase (34) et monté en appui contre ledit élément d'isolation sous vide (32), ledit élément d'isolation sous vide (32) étant entièrement logé entre l'embase et ledit couvercle de fermeture, et
- au moins un moyen d'étanchéité (38) qui est interposé entre l'embase (34) et ledit couvercle (36) de fermeture et qui est périphérique audit élément d'isolation sous vide (32).

2. Module selon la revendication 1, dans lequel le moyen d'étanchéité (38) recouvre au moins en partie la surface de butée qui est ménagée sur l'embase (34) et contre laquelle est monté en appui ledit couvercle (36) de fermeture.

3. Module selon la revendication 1 ou 2, dans lequel l'embase (34) comprend au moins un épaulement (44, 54) décalé latéralement vers l'extérieur par rapport audit logement (42) et décalé vers ledit couvercle (36) de fermeture par rapport au fond dudit logement, le moyen d'étanchéité (38) périphérique s'étendant au moins le long dudit épaulement (44, 54).

4. Module selon l'une quelconque des revendications précédentes, dans lequel ledit élément d'isolation sous vide (32) est centré sur le plan (43) longitudinal médian dudit module.

5. Module selon l'une quelconque des revendications précédentes, dans lequel ledit couvercle (36) de fermeture présente une couleur et/ou une texture différente(s) de celle(s) de l'embase (34).

6. Module selon l'une quelconque des revendications précédentes, dans lequel l'embase (34) et ledit couvercle (36) de fermeture sont réalisés chacun dans un matériau isolant thermiquement.

7. Module selon l'une quelconque des revendications précédentes, dans lequel l'embase (34) est réalisée en polyuréthane expansé.

8. Module selon l'une quelconque des revendications précédentes, dans lequel ledit couvercle (36) de fermeture est réalisé en polyuréthane expansé.

9. Module selon l'une quelconque des revendications précédentes, dans lequel l'embase (34) délimite une pluralité de logements (42) à l'intérieur de chacun desquels est disposé un élément d'isolation sous vide (32), le module comprenant une pluralité de couvercles (36) de fermeture associés chacun à un élément d'isolation sous vide (32).

10. Panneau de carrosserie pour véhicule frigorifique, notamment pour véhicule routier de transport de marchandises, comprenant une pluralité de modules (30) de carrosserie selon l'une quelconque des revendications précédentes alignés longitudinalement les uns relativement aux autres.

11. Carrosserie frigorifique pour véhicule, notamment pour véhicule routier de transport de marchandises, comprenant un espace intérieur de chargement délimité par des parois formant des flancs verticaux, un plancher et un plafond, dans laquelle au moins une desdites parois comprend un panneau de carrosserie selon la revendication 10.

12. Procédé de fabrication d'un module de carrosserie selon l'une quelconque des revendications 1 à 9, comprenant :
- une étape de montage dudit élément d'isolation sous vide à l'intérieur dudit logement de l'embase,
- une étape de dépose du moyen d'étanchéité sur une surface de l'embase qui est périphérique audit logement de l'embase, et
- une étape de pressage du couvercle contre ledit élément d'isolation sous vide et contre ledit moyen d'étanchéité déposé sur la surface de l'embase périphérique audit logement.

13. Procédé selon la revendication 12, dans lequel l'étape de pressage du couvercle est réalisée sous vide.

## Patentansprüche

1. Karosseriemodul für ein Kühlfahrzeug, insbesondere für ein Straßenfahrzeug zum Warentransport, umfassend mindestens ein Vakuumisolierelement (32), das mit einem Kern (39) und einer gasdichten Membran (40) zum Einkapseln des Kerns versehen ist, **dadurch gekennzeichnet, dass** es ferner umfasst:
- eine Basis (34), die mindestens eine Aufnahme (42) begrenzt, in deren Inneren das Vakuumisolierelement (32) angeordnet ist,
- mindestens ein Verschlussdeckel (36), der auf der Basis (34) befestigt und in Abstützung auf dem Vakuumisolierelement (32) angebracht ist, wobei das Vakuumisolierelement (32) vollständig zwischen der Basis und dem Verschlussdeckel untergebracht ist, und
- mindestens ein Dichtmittel (38), das zwischen der Basis (34) und dem Verschlussdeckel (36) angeordnet ist und das zum Vakuumisolierelement (32) peripher ist.

2. Modul nach Anspruch 1, wobei das Dichtmittel (38) die Anschlagoberfläche mindestens teilweise bedeckt, die auf der Basis (34) eingerichtet ist und auf der der Verschlussdeckel (36) in Abstützung angebracht ist.

3. Modul nach Anspruch 1 oder 2, wobei die Basis (34) mindestens einen Absatz (44, 54) umfasst, der im Verhältnis zur Aufnahme (42) nach außen versetzt und im Verhältnis zum Boden der Aufnahme zum Verschlussdeckel (36) versetzt ist, wobei sich das periphere Dichtmittel (38) mindestens entlang des Absatzes (44, 54) erstreckt.

4. Modul nach einem der vorangehenden Ansprüche, wobei das Vakuumisolierelement (32) auf der mittleren Längsebene (43) des Moduls zentriert ist.

5. Modul nach einem der vorangehenden Ansprüche, wobei der Verschlussdeckel (36) eine Farbe und/oder eine Textur aufweist, die von der/denen der Basis (34) unterschiedlich ist/sind.

6. Modul nach einem der vorangehenden Ansprüche, wobei die Basis (34) und der Verschlussdeckel (36) jeweils aus einem thermisch isolierenden Material hergestellt sind.

7. Modul nach einem der vorangehenden Ansprüche, wobei die Basis (34) aus expandiertem Polyurethan hergestellt ist.

8. Modul nach einem der vorangehenden Ansprüche, wobei der Verschlussdeckel (36) aus expandiertem Polyurethan hergestellt ist.

9. Modul nach einem der vorangehenden Ansprüche, wobei die Basis (34) eine Vielzahl von Aufnahmen (42) begrenzt, in deren Inneren jeweils ein Vakuumisolierelement (32) angeordnet ist, wobei das Modul eine Vielzahl von Verschlussdeckeln (36) umfasst, die jeweils einem Vakuumisolierelement (32) zugeordnet sind.

10. Karosseriepaneel für ein Kühlfahrzeug, insbesondere für ein Straßenfahrzeug zum Warentransport, umfassend eine Vielzahl von Karosseriemodulen (30) nach einem der vorangehenden Ansprüche, die im Verhältnis zueinander längs ausgerichtet sind.

11. Kühlkarosserie für ein Fahrzeug, insbesondere für ein Straßenfahrzeug zum Warentransport, umfassend einen inneren Laderaum, der von Wänden, die vertikale Flanken bilden, einem Boden und einer Decke begrenzt ist, wobei mindestens eine der Wände ein Karosseriepaneel nach Anspruch 10 umfasst.

12. Verfahren zur Herstellung eines Karosseriemoduls nach einem der Ansprüche 1 bis 9, umfassend:
- einen Schritt des Anbringens des Vakuumisolierelements im Inneren der Aufnahme der Basis,
- einen Schritt des Aufbringens des Dichtmittels auf einer Oberfläche der Basis, die zur Aufnahme der Basis peripher ist, und
- einen Schritt des Pressens des Verschlussdeckels auf das Vakuumisolierelement und auf das Dichtmittel, das auf der zur Aufnahme peripheren Oberfläche der Basis aufgebracht ist.

13. Verfahren nach Anspruch 12, wobei der Schritt des Pressens des Verschlussdeckels im Vakuum durchgeführt wird.

## Claims

1. A bodywork module for a refrigerated vehicle, in particular for a road vehicle for transporting goods, comprising at least one vacuum insulation element (32) provided with a core (39) and with an encapsulation membrane (40) of said core which is gastight, **characterised in that** it further comprises:
- a base (34) delimiting at least one housing (42) inside which said vacuum insulation element (32) is disposed,
- at least one closure cover (36) fastened on the base (34) and mounted in abutment against said vacuum insulation element (32), said vacuum insulation element (32) being entirely housed between the base and said closure cover, and
- at least one sealing means (38) which is interposed between the base (34) and said closure cover (36) and which is peripheral to said vacuum insulation element (32) .

2. The module according to claim 1, wherein the sealing means (38) at least partially covers the stop surface which is formed on the base (34) and against which said closure cover (36) is mounted in abutment.

3. The module according to claim 1 or 2, wherein the base (34) comprises at least one shoulder (44, 54) laterally offset outwardly with respect to said housing (42) and offset towards said closure cover (36) with respect to the bottom of said housing, the peripheral sealing means (38) extending at least along said shoulder (44, 54).

4. The module according to any one of the preceding claims, wherein said vacuum insulation element (32) is centred on the longitudinal midplane (43) of said module.

5. The module according to any one of the preceding claims, wherein said closure cover (36) has a colour and/or a texture different from that(those) of the base (34) .

6. The module according to any one of the preceding claims, wherein each of the base (34) and said closure cover (36) is made of a heat-insulating material.

7. The module according to any one of the preceding claims, wherein the base (34) is made of expanded polyurethane.

8. The module according to any one of the preceding claims, wherein said closure cover (36) is made of expanded polyurethane.

9. The module according to any one of the preceding claims, wherein the base (34) delimits a plurality of housings (42) inside each of which a vacuum insulation element (32) is disposed, the module comprising a plurality of closure covers (36) each associated with a vacuum insulation element (32).

10. A bodywork panel for a refrigerated vehicle, in particular for a road vehicle for transporting goods, comprising a plurality of bodywork modules (30) according to any one of the preceding claims aligned longitudinally relative to each other.

11. A refrigerated bodywork for a vehicle, in particular for a road vehicle for transporting goods, comprising an internal loading space delimited by walls forming vertical sidewalls, a floor and a ceiling, wherein at least one of said walls comprises a bodywork panel according to claim 10.

12. A method for manufacturing a bodywork module according to any one of claims 1 to 9, comprising:
- a step of mounting said vacuum insulation element inside said housing of the base,
- a step of depositing the sealing means over a surface of the base which is peripheral to said housing of the base, and
- a step of pressing the cover against said vacuum insulation element and against said sealing means deposited over the surface of the peripheral base of said housing.

13. The method according to claim 12, wherein the step of pressing the cover is carried out under vacuum.
